# EUROPÄISCHE PATENTSCHRIFT

(11) **EP 3 546 420 B1**
(45) Veröffentlichungstag und Bekanntmachung des Hinweises auf die Patenterteilung: **23.11.2022**
(21) Anmeldenummer: 19164357.6
(22) Anmeldetag: 21.03.2019
(51) Int. Cl.: B66F 9/24, B66F 17/00, H02J 7/00

(54) **FLURFÖRDERZEUG MIT EINEM ELEKTRISCHEN ANTRIEB SOWIE VERFAHREN ZUM ÜBERWACHEN EINER TRAKTIONSBATTERIE IN EINEM FLURFÖRDERZEUG**
INDUSTRIAL TRUCK WITH AN ELECTRICAL DRIVE AND METHOD FOR MONITORING A TRACTION BATTERY IN AN INDUSTRIAL TRUCK
CHARIOT DE MANUTENTION DOTÉ D'UN ENTRAÎNEMENT ÉLECTRIQUE AINSI QUE PROCÉDÉ DE SURVEILLANCE D'UNE BATTERIE DE TRACTION DANS UN CHARIOT DE MANUTENTION

(30) Priorität: 28.03.2018 DE 102018107498
(43) Veröffentlichungstag der Anmeldung: 02.10.2019
(73) Patentinhaber: Jungheinrich Aktiengesellschaft, 22047 Hamburg (DE)
(72) Erfinder: FUHRMANN, Alexander, 22844 Norderstedt (DE); RATHMANN, Hannes, 24106 Kiel (DE); HANISCH, Stefan, 32657 Lemgo (DE)
(74) Vertreter: Seemann & Partner Patentanwälte mbB

(56) Entgegenhaltungen:
- EP-A2- 2 110 922

## Beschreibung

Die Erfindung betrifft ein Flurförderzeug mit einem elektrischen Antrieb und einer Traktionsbatterie zur Versorgung zumindest des elektrischen Antriebs und mit einer mit der Traktionsbatterie elektrisch verbundenen Batteriemanagementvorrichtung. Ferner betrifft die Erfindung ein Verfahren zum Überwachen einer Traktionsbatterie in einem Flurförderzeug mit einem elektrischen Antrieb und einer Batteriemanagementvorrichtung, wobei die Traktionsbatterie zumindest den elektrischen Antrieb versorgt und elektrisch mit diesem verbunden ist.

Elektrisch angetriebene Flurförderzeuge, beispielsweise Gabelstapler, umfassen Traktionsbatterien als Energiequelle, mit der ein elektrisches Antriebssystem und in vielen Fällen auch weitere Verbraucher mit elektrischer Energie versorgt werden. Bei Flurförderzeugen umfasst das Antriebssystem beispielsweise einen elektrischen Fahrmotor und einen elektrischen Pumpenmotor, der die Arbeitshydraulik und ggf. auch eine hydraulische Lenkungseinrichtung versorgt. Die Traktionsbatterien müssen in regelmäßigen zeitlichen Abständen aufgeladen werden. Dabei kann die Traktionsbatterie entweder im Fahrzeug verbleiben, wobei sie mit einer entsprechenden Ladevorrichtung verbunden wird, oder die Traktionsbatterie wird ausgebaut und gegen eine aufgeladene Traktionsbatterie ausgewechselt.

Die Traktionsbatterien sind mit einer Batteriemanagementvorrichtung, die vielfach auch als Batterie-Controller bezeichnet wird, elektrisch verbunden. Oftmals ist die Batteriemanagementvorrichtung auch mechanisch mit der Traktionsbatterie verbunden und bildet mit dieser eine gemeinsame Einheit oder Baugruppe.

Die Batteriemanagementvorrichtung ist eine elektronische Schaltung, die zur Überwachung, Regelung und zum Schutz der Akkumulatoren der Traktionsbatterie eingerichtet ist. Hierzu umfasst die Batteriemanagementvorrichtung vielfach einen Mikrocontroller. Beispielsweise kann die Batteriemanagementvorrichtung eine Ladezustandserkennung durchführen und einen Tiefentlade- oder einen Überladeschutz zur Verfügung stellen. Sie kann ferner die vom Flurförderzeug verbrauchte Energiemenge oder eine Betriebsdauer des Flurförderzeugs mit der entsprechenden Traktionsbatterie protokollieren und speichern.

Flurförderzeuge werden vielfach als Mietfahrzeuge betrieben. Beim Einsatz in einer Mietflotte kann die Abrechnung der Nutzung des Flurförderzeugs beispielsweise über den Mietzeitraum oder auch über einen Einsatzzeitraum erfolgen. Zur Abrechnung anhand der Einsatzzeit kann beispielsweise die verbrauchte Energie in Kilowattstunden (kWh) herangezogen werden. Der Energieverbrauch des Flurförderzeugs wird beispielsweise von der Batteriemanagementvorrichtung erfasst und dient nach Rückgabe des Flurförderzeugs als Grundlage für die Abrechnung mit dem Mieter.

Es kommt in der Praxis immer wieder vor, dass Batteriemanagementvorrichtungen manipuliert werden, um eine korrekte Abrechnung des Einsatzzeitraums durch den Vermieter zu erschweren.

Aus EP 2 110 922 A2 ist ein Verfahren zum Datenaustausch zwischen einer Batterieeinheit und einer Steuereinheit eines elektrisch mit der Batterie verbundenen Flurförderzeugs oder eines Ladegeräts bekannt. Die Steuereinheit des Flurförderzeugs oder des Ladegeräts legt über eine elektrische Verbindung ein Stromimpulsmuster an die Batterieeinheit an. Eine Steuereinheit kommuniziert über ein drahtloses Kommunikationsnetzwerk ein Assoziierungssignal, welches eine eindeutige Identifikationsnummer der Steuereinheit umfasst. Außerdem umfasst das Assoziierungssignal eine Datenfolge, die das Stromimpulsmuster, welches von der Steuereinheit oder dem Ladegerät an die Batterieeinheit über die elektrische Verbindung angelegt wird, eindeutig kennzeichnet. Die Batterieeinheit vergleicht die in dem Assoziierungssignal vorhandene Datenfolge mit dem gemessenen elektrischen Stromimpulsmuster des Stroms, den sie von dem Flurförderzeug oder dem Ladegerät empfängt. Sofern diese übereinstimmen, sendet die Batterieeinheit eine Assoziierungsantwort über das Kommunikationsnetzwerk an diejenige Einheit, die durch die Identifikationsnummer, welche in dem Assoziierungssignal vorhanden ist, eindeutig gekennzeichnet ist. So ist es möglich, eine eindeutige Zuordnung zwischen einer Batterieeinheit und einem Flurförderzeug oder einem Ladegerät festzustellen und zu verifizieren, obwohl über das Kommunikationsnetzwerk nach dem Broadcastprinzip gesetzt wird, diese Signale also potentiell eine Vielzahl von Flurförderzeugen und Ladegeräten empfangen können. EP 2 110 922 A2 offenbart ein Flurförderzeug gemäß dem Oberbegriff des unabhängigen Anspruchs 1 und ein Verfahren gemäß dem Oberbegriff des Anspruchs 7.

Es ist eine Aufgabe der Erfindung, ein verbessertes Flurförderzeug sowie ein verbessertes Verfahren zum Überwachen einer Traktionsbatterie in einem Flurförderzeug, insbesondere im Hinblick auf die Manipulationsfestigkeit des Flurförderzeugs, anzugeben.

Die Aufgabe wird gelöst durch ein Flurförderzeug mit einem elektrischen Antrieb und einer Traktionsbatterie zur Versorgung zumindest des elektrischen Antriebs und mit einer mit der Traktionsbatterie elektrisch verbundenen Batteriemanagementvorrichtung, wobei das Flurförderzeug dadurch fortgebildet ist, dass die Batteriemanagementvorrichtung dazu eingerichtet ist, eine Unterbrechung der elektrischen Verbindung zu der Traktionsbatterie festzustellen und im Fall einer solchen Unterbrechung eine Unterbrechungsmeldung auszugeben oder bereitzustellen.

Es wurde erkannt, dass bei den in der Praxis immer wieder auftretenden Manipulationen der Batteriemanagementvorrichtung diese einfach von der Traktionsbatterie entfernt oder durch eine andere Batteriemanagementvorrichtung ersetzt wird. Vor der Rückgabe des Flurförderzeugs wird wieder die ursprüngliche Batteriemanagementvorrichtung im Flurförderzeug montiert, so dass der tatsächliche Einsatzzeitraum des Flurförderzeugs nicht korrekt protokolliert ist und seitens des Vermieters nicht nachvollzogen werden kann.

Vorteilhaft erkennt die Batteriemanagementvorrichtung gemäß Aspekten der Erfindung, wenn sie von der Traktionsbatterie elektrisch getrennt wird. Anhand der in Reaktion auf dieses Ereignis erzeugten Unterbrechungsmeldung ist leicht nachvollziehbar, dass eine Manipulation an der Traktionsbatterie, genauer an der Batteriemanagementvorrichtung, des Flurförderzeugs stattgefunden hat. In einem solchen Fall kann beim Einsatz des Flurförderzeugs in einer Mietflotte beispielsweise auf ein anderes Abrechnungsmodell für die fällige Miete zurückgegriffen werden. Außerdem ist es bei der Rückgabe des Flurförderzeugs nach einem Mieteinsatz problemlos und einfach möglich, eine Manipulation an der Traktionsbatterie zu erkennen.

Das Flurförderzeug ist ferner insbesondere dadurch fortgebildet, dass die Batteriemanagementvorrichtung einen nichtflüchtigen internen Speicher umfasst und ferner dazu eingerichtet ist, die Unterbrechungsmeldung auf diesem Speicher abzulegen.

Die Ablage der Unterbrechungsmeldung auf dem internen Speicher der Batteriemanagementvorrichtung ist besonders manipulationssicher. Die Batteriemanagementvorrichtung kann mit einer eigenen Energieversorgung, beispielsweise einer Pufferbatterie oder dergleichen, ausgestattet sein. Sie ist dann in der Lage, ihre Funktion für einen vorgesehenen Zeitraum aufrechtzuerhalten, auch wenn sie von der Traktionsbatterie elektrisch getrennt ist. Bei einer solchen Ausführung ist es ebenso möglich, anstatt eines nichtflüchtigen internen Speichers einen flüchtigen Speicher zu verwenden, der von der Pufferbatterie versorgt wird.

Gemäß einer weiteren Ausführungsform ist das Flurförderzeug dadurch fortgebildet, dass die Batteriemanagementvorrichtung Kommunikationsmittel umfasst, mit denen eine insbesondere drahtlose Datenverbindung zu einer insbesondere in oder am Flurförderzeug vorhandenen dritten Einheit, insbesondere einer Steuereinheit des Flurförderzeugs, herstellbar ist, wobei die Batteriemanagementvorrichtung ferner dazu eingerichtet ist, die Unterbrechungsmeldung über die Datenverbindung an die dritte Einheit zu senden.

Die dritte Einheit kann ferner insbesondere eine Wiedergabeeinheit, beispielsweise ein Display oder dergleichen, umfassen. Das Entfernen der Batteriemanagementvorrichtung kann auf diese Anzeige angezeigt werden. Es ist ebenso vorgesehen, dass die Unterbrechungsmeldung in der dritten Einheit, insbesondere in einem nicht flüchtigen Speicher, gespeichert wird. Beispielsweise wird die Unterbrechungsmeldung in einem Protokoll der Betriebssteuerung des Flurförderzeugs abgelegt. Wird beispielsweise nach Rückgabe aus einer Mietflotte dieses Protokoll ausgelesen, so ist es direkt möglich, die Unterbrechungsmeldung aufzufinden und die Abrechnung des Einsatzzeitraums des Flurförderzeugs ggf. zu korrigieren.

Die Kommunikation mit der dritten Einheit erfolgt beispielsweise drahtgebunden über CAN-Bus oder DC-Bus oder auch drahtlos beispielsweise über Bluetooth. Es ist vorgesehen, dass die Batteriemanagementvorrichtung die Unterbrechungsmeldung aktiv sendet oder aber zum Abruf, beispielsweise durch die dritte Einheit, bei der es sich um die Steuereinheit des Flurförderzeugs handeln kann, bereitgestellt wird.

Gemäß einer weiteren Ausführungsform ist vorgesehen, dass die Batteriemanagementvorrichtung ferner dazu eingerichtet ist einen ersten Zeitpunkt der Unterbrechung der elektrischen Verbindung und einen zweiten Zeitpunkt einer Wiederherstellung der elektrischen Verbindung zu detektieren und als Bestandteil der Unterbrechungsmeldung auszugeben oder bereitzustellen.

Insbesondere ist die Batteriemanagementvorrichtung ferner dazu eingerichtet, aus einer Differenz zwischen dem ersten Zeitpunkt und dem zweiten Zeitpunkt einen Zeitraum zu bestimmen, für den die Batteriemanagementvorrichtung von der Traktionsbatterie getrennt war. Anhand des auf diese Weise bestimmten Zeitraums kann der Benutzungszeitraum korrigiert werden.

Gemäß einer weiteren Ausführungsform ist vorgesehen, dass die Batteriemanagementvorrichtung eine optische und/oder akustische Ausgabeeinheit umfasst und ferner dazu eingerichtet ist die Unterbrechungsmeldung als optisches Signal über die optische Ausgabeeinheit und/oder als akustisches Signal über die akustische Ausgabeeinheit auszugeben.

Vorteilhaft ist anhand der optischen oder akustischen Ausgabeeinheit leicht und sofort ersichtlich, dass die Batteriemanagementvorrichtung von der Traktionsbatterie getrennt wurde. Eine akustische Ausgabe kann den Benutzer des Flurförderzeugs warnen, eine entsprechende Trennung nicht vorzunehmen oder rückgängig zu machen. Es ist ebenso insbesondere vorgesehen, dass die Batteriemanagementvorrichtung eine Anzeige umfasst, auf der entsprechende Informationen bereitgestellt werden, beispielsweise "Batteriecontroller mit der Traktionsbatterie verbinden".

Gemäß einer weiteren Ausführungsform ist das Flurförderzeug dadurch fortgebildet, dass die Batteriemanagementvorrichtung dazu eingerichtet ist eine Unterbrechung der elektrischen Verbindung anhand eines Absinkens einer einem Eingang der Batteriemanagementvorrichtung bereitgestellten Versorgungsspannung unter einen vorgegebenen Grenzwert festzustellen.

Die Versorgungsspannung wird im verbundenen Zustand von der Traktionsbatterie bereitgestellt und liegt in einem für die Traktionsbatterie typischen Bereich. Ein Absinken der Versorgungsspannung ist ein sehr sicherer Hinweis auf das Entfernen der Batteriemanagementvorrichtung von der Traktionsbatterie. Das Absinken der Versorgungsspannung unter den vorbestimmten Grenzwert könnte anderenfalls nur durch eine sehr starke Entladung der Traktionsbatterie auftreten. Eine solche Tiefentladung würde jedoch zu einer Beschädigung der Traktionsbatterie führen, was ohne Weiteres nachweisbar wäre. Ist dies nicht der Fall, bleibt als einziger Grund für den Abfall der Versorgungsspannung die Trennung der Batteriemanagementvorrichtung von der Traktionsbatterie übrig.

Die Batteriemanagementvorrichtung ist beispielsweise mit einer Pufferbatterie oder einem Pufferkondensator ausgestattet, so dass bei einem plötzlichen Abfall der Versorgungspannung die Batteriemanagementvorrichtung noch so lange betriebsfähig bleibt, bis diese die Unterbrechungsmeldung und ggf. den Zeitpunkt des Eintritts des Abfalls der Versorgungsspannung auf einem internen Speicher abgelegt oder über eine Datenverbindung an die dritte Einheit kommuniziert hat. Sollte die interne Energieversorgung der Batteriemanagementvorrichtung für einen langen Zeitraum ausgelegt sein, so kann die Batteriemanagementvorrichtung im Betrieb bleiben oder in einen Standby-Zustand übergehen. Dieser Zustand hält so lange an, bis wieder eine entsprechende Versorgungsspannung am Eingang der Batteriemanagementvorrichtung detektierbar ist. Die Batteriemanagementvorrichtung kann aber auch so ausgestaltet sein, dass diese nach erfolgter Feststellung des Einbruchs der Versorgungsspannung und Speichern bzw. Kommunikation der Unterbrechungsmeldung komplett abschaltet. Liegt erneut eine Versorgungsspannung am Eingang der Batteriemanagementvorrichtung an, so dass diese den Betrieb wieder aufnimmt, kann die Wiederaufnahme des Betriebs als Wiederherstellung der elektrischen Verbindung zu der Traktionsbatterie gewertet werden. Um den zweiten Zeitpunkt dieses Ereignisses festzustellen, kann die Batteriemanagementvorrichtung beispielsweise, sofern sie nicht über eine dauerhaft betriebsfähige interne Uhr (Timer) verfügt, die aktuelle Zeit (und das aktuelle Datum) von einem Ladegerät abfragen. Es ist ebenso vorgesehen, dass beispielsweise eine Verbindung zu der dritten Einheit aufgebaut wird, um einen aktuellen Zeitstempel zu erhalten.

Die Aufgabe wird ferner gelöst durch ein Verfahren zum Überwachen einer Traktionsbatterie in einem Flurförderzeug mit einem elektrischen Antrieb und einer Batteriemanagementvorrichtung, wobei die Traktionsbatterie zumindest den elektrischen Antrieb versorgt und elektrisch mit diesem verbunden ist, wobei das Verfahren dadurch fortgebildet ist, dass die Batteriemanagementvorrichtung eine Unterbrechung der elektrischen Verbindung zwischen der Traktionsbatterie und dem Antrieb feststellt und im Fall einer solchen Unterbrechung eine Unterbrechungsmeldung ausgibt oder bereitstellt.

Auf das Verfahren zum Überwachen der Traktionsbatterie treffen gleiche oder ähnliche Vorteile zu, wie sie bereits zuvor im Hinblick auf das Flurförderzeug erwähnt wurden, so dass auf entsprechende Wiederholungen verzichtet werden soll. Ebenso kann das Verfahren mit gleichen oder ähnlichen Merkmalen fortgebildet werden, wie sie zuvor im Hinblick auf das Flurförderzeug erwähnt wurden.

Das Verfahren ist insbesondere dadurch fortgebildet, dass die Batteriemanagementvorrichtung einen nichtflüchtigen internen Speicher umfasst und die Unterbrechungsmeldung auf diesem Speicher ablegt.

Ferner ist das Verfahren insbesondere dadurch fortgebildet, dass die Batteriemanagementvorrichtung Kommunikationsmittel umfasst, mit denen eine insbesondere drahtlose Datenverbindung zu einer insbesondere in oder am Flurförderzeug vorhandenen dritten Einheit, insbesondere einer Steuereinheit des Flurförderzeugs, hergestellt wird, wobei die Batteriemanagementvorrichtung die Unterbrechungsmeldung über die Datenverbindung an die dritte Einheit sendet.

Das Verfahren ist gemäß einer weiteren Ausführungsform dadurch fortgebildet, dass die Batteriemanagementvorrichtung ferner einen ersten Zeitpunkt der Unterbrechung der elektrischen Verbindung und einen zweiten Zeitpunkt einer Wiederherstellung der elektrischen Verbindung detektiert und als Bestandteil der Unterbrechungsmeldung ausgibt oder bereitstellt.

Gemäß einer weiteren Ausführungsform ist das Verfahren dadurch fortgebildet, dass die Batteriemanagementvorrichtung eine optische und/oder akustische Ausgabeeinheit umfasst und die Unterbrechungsmeldung als optisches Signal über die optische Ausgabeeinheit und/oder als akustisches Signal über die akustische Ausgabeeinheit ausgegeben wird.

Gemäß einer weiteren Ausführungsform ist vorgesehen, dass die Batteriemanagementvorrichtung eine Unterbrechung der elektrischen Verbindung anhand eines Absinkens einer im verbundenen Zustand von der Traktionsbatterie an einem Eingang der Batteriemanagementvorrichtung bereitgestellten Versorgungsspannung unter einen vorgegebenen Grenzwert feststellt.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen, solange sie in den Schutzbereich der beigefügten Ansprüche fallen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematisch vereinfachte Darstellung eines Flurförderzeugs mit einem elektrischen Antrieb und einer Traktionsbatterie,
- Fig. 2: eine Traktionsbatterie mit einer Batteriemanagementvorrichtung und einer optischen und einer akustischen Ausgabeeinheit.

In den Zeichnungen sind jeweils gleiche oder gleichartige Elemente und/oder Teile mit denselben Bezugsziffern versehen, so dass von einer erneuten Vorstellung jeweils abgesehen wird.

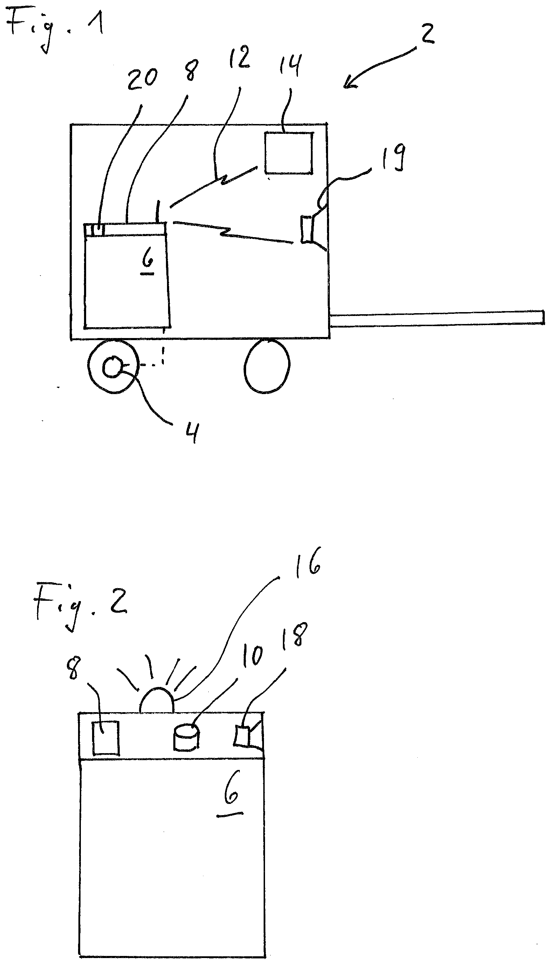

Fig. 1 zeigt in schematisch stark vereinfachter Darstellung ein Flurförderzeug 2, welches elektrisch angetrieben ist und zu diesem Zweck einen elektrischen Antrieb 4 umfasst. Der elektrische Antrieb 4 ist mit einer Traktionsbatterie 6 elektrisch verbunden, so wie mit gestrichelter Linie angedeutet. Die Traktionsbatterie 6 ist außerdem mit einer Batteriemanagementvorrichtung 8 versehen. Die Batteriemanagementvorrichtung 8 ist elektrisch mit der Traktionsbatterie 6 verbunden und bildet beispielsweise eine gemeinsame Einheit oder Baugruppe mit der Traktionsbatterie 6.

Elektrisch angetriebene Flurförderzeuge 2, beispielsweise Gabelstapler, kommen vielfach in Mietflotten zum Einsatz. Die Abrechnung der Mietdauer erfolgt vielfach über die verbrauchte Energie. Zu diesem Zweck wird von der Batteriemanagementvorrichtung 8 der von dem Flurförderzeug 2 verbrauchte Strom ermittelt. Um die in der Praxis immer wieder auftretenden Manipulationen der Batteriemanagementvorrichtung 8 zu unterbinden und zu detektieren, ist die Batteriemanagementvorrichtung 8 dazu eingerichtet, eine Unterbrechung der elektrischen Verbindung zu der Traktionsbatterie 6 festzustellen. Wird eine solche Unterbrechung der elektrischen Verbindung zur Traktionsbatterie 6 festgestellt, wird in der Batteriemanagementvorrichtung 8 eine Unterbrechungsmeldung erzeugt und entweder ausgegeben oder bereitgestellt. Zu diesem Zweck umfasst die Batteriemanagementvorrichtung 8, beispielsweise einen nichtflüchtigen internen Speicher 10, bei dem es sich beispielsweise um ein EEPROM handelt (vgl. Fig. 2). Die Unterbrechungsmeldung wird auf diesem Speicher 10 abgelegt.

Es ist ebenso beispielsweise vorgesehen, dass die Batteriemanagementvorrichtung 8 Kommunikationsmittel umfasst, mit denen eine insbesondere drahtlose Datenverbindung 12 zu einer dritten Einheit 14 hergestellt werden kann. Bei der dritten Einheit 14 handelt es sich beispielsweise um eine Steuereinheit des Flurförderzeugs 2, oder einen Teil dieser Steuereinheit. Die Batteriemanagementvorrichtung 8 ist nun beispielsweise dazu eingerichtet, die Unterbrechungsmeldung über diese Datenverbindung 12, an die dritte Einheit 14 zu senden. Die Batteriemanagementvorrichtung 8 kann ebenso dazu eingerichtet sein, die Unterbrechungsmeldung lediglich bereitzustellen, sodass die dritte Einheit 14 diese beispielsweise über die Datenverbindung 12 von der Batteriemanagementvorrichtung 8 abruft.

Die Batteriemanagementvorrichtung 8 ist ferner insbesondere dazu eingerichtet, einen ersten Zeitpunkt, zudem die elektrische Verbindung zu der Traktionsbatterie 6 unterbrochen wird, festzustellen und diese Information in die Unterbrechungsmeldung zu integrieren. Die Batteriemanagementvorrichtung 8 ist ferner insbesondere dazu eingerichtet, einen zweiten Zeitpunkt festzustellen, zudem die elektrische Verbindung zu der Traktionsbatterie 6 wiederhergestellt wird. Aus der Differenz des ersten und des zweiten Zeitpunkts kann die Zeitspanne bestimmt werden, für die die Batteriemanagementvorrichtung 8 von der Traktionsbatterie 6 getrennt war. Der erste und der zweite Zeitpunkt und gegebenenfalls auch die daraus errechnete Zeitspanne können in die Unterbrechungsmeldung integriert werden.

Fig. 2 zeigt eine Traktionsbatterie 6 mit einer Batteriemanagementvorrichtung 8, die mit einer optischen Ausgabeeinheit 16, beispielsweise einem Blinklicht oder dergleichen und mit einer akustischen Ausgabeeinheit 18, beispielsweise einem Summer oder einem Lautsprecher versehen ist. Die Batteriemanagementvorrichtung 8 ist dazu eingerichtet, über die optische Ausgabeeinheit 16 oder die akustische Ausgabeeinheit 18, ein optisches und oder ein akustisches Signal auszugeben, wenn die Batteriemanagementvorrichtung 8 detektiert, dass die elektrische Verbindung zu der Traktionsbatterie 6 getrennt wird.

Es ist ebenso vorgesehen, dass das Flurförderzeug 2 (vgl. Fig. 1) mit einer akustischen Ausgabeeinheit 19 versehen ist, welche beispielsweise über eine drahtlose Datenverbindung von der Batteriemanagementvorrichtung 8 angesteuert wird. Stellt die Batteriemanagementvorrichtung 8 fest, dass sie von der Traktionsbatterie 6 getrennt wird, wird die akustische Ausgabeeinheit 19 am Flurförderzeug 2 aktiviert.

Die Batteriemanagementvorrichtung 8 ist ferner beispielsweise dazu eingerichtet, eine Unterbrechung der elektrischen Verbindung zu der Traktionsbatterie 6 anhand eines Absinkens einer an einem Eingang der Batteriemanagementvorrichtung 8 bereitgestellten Versorgungsspannung festzustellen. Diese Versorgungsspannung stellt im gekoppelten Betrieb, wenn die Batteriemanagementvorrichtung 8 mit der Traktionsbatterie 6 elektrisch verbunden ist, die Traktionsbatterie 6 zur Verfügung. Sinkt die Versorgungsspannung der Batteriemanagementvorrichtung 8 unter einen vorgegebenen Grenzwert ab, so ist dies ein Hinweis darauf, dass die Batteriemanagementvorrichtung 8 von der Traktionsbatterie 6 getrennt wurde. Gemäß einer weiteren Ausführungsform ist vorgesehen, dass die Batteriemanagementvorrichtung 8 detektiert, ob die Versorgungsspannung innerhalb einer vorgegebenen Zeitspanne unter einen vorgegebenen Grenzwert abfällt. Mit anderen Worten detektiert also die Batteriemanagementvorrichtung 8, ob ein sehr schneller Spannungsabfall stattfindet. Dies ist ein sehr zuverlässiger Hinweis darauf, dass die Batteriemanagementvorrichtung 8 von der Traktionsbatterie 6 elektrisch getrennt wurde.

Damit die Batteriemanagementvorrichtung 8 in einem solchen Fall noch für einen gewünschten Zeitraum betriebsfähig ist, während dessen sie die Unterbrechungsmeldung erzeugt, ausgibt oder bereitstellt und diese gegebenenfalls auf dem internen Speicher 10 ablegt, umfasst die Batteriemanagementvorrichtung 8 einen internen Pufferspeicher 20, beispielsweise eine Batterie oder einen Kondensator.

Die am Flurförderzeug 2, vorhandene dritte Einheit 14 umfasst beispielsweise eine Anzeige, welche einen optischen Hinweis ausgibt, wenn die Batteriemanagementvorrichtung 8 von der Traktionsbatterie 6 getrennt wird. Es kann ebenso eine optische oder akustische Kodierung angezeigt oder ausgegeben werden, die die Anzahl der Trennungen der Batteriemanagementvorrichtung 8 von der Traktionsbatterie 6 anzeigt. Hieraus kann eine Gesamtzeit errechnet werden, für die die Batteriemanagementvorrichtung 8 von der Traktionsbatterie 6 getrennt war. Diese Information liefern beispielsweise die Grundlage für eine korrigierte Berechnung der Betriebszeit des Flurförderzeugs 2 beispielsweise während einer Mietzeit.

Erfindungsgemäße Ausführungsformen können durch einzelne Merkmale oder eine Kombination mehrerer Merkmale erfüllt sein, solange sie in den Schutzbereich der beigefügten Ansprüche fallen.

Im Rahmen der Erfindung sind Merkmale, die mit "insbesondere" oder "vorzugsweise" gekennzeichnet sind, als fakultative Merkmale zu verstehen.

### Bezuqszeichenliste

- 2: Flurförderzeug
- 4: elektrischer Antrieb
- 6: Traktionsbatterie
- 8: Batteriemanagementvorrichtung
- 10: interner Speicher
- 12: drahtlose Datenverbindung
- 14: dritte Einheit
- 16: optische Ausgabeeinheit
- 18,19: akustische Ausgabeeinheit
- 20: Pufferspeicher

## Patentansprüche

1. Flurförderzeug (2) mit einem elektrischen Antrieb (4) und einer Traktionsbatterie (6) zur Versorgung zumindest des elektrischen Antriebs (4) und mit einer mit der Traktionsbatterie (6) elektrisch verbundenen Batteriemanagementvorrichtung (8), **dadurch gekennzeichnet, dass** die Batteriemanagementvorrichtung (8) dazu eingerichtet ist, eine Unterbrechung der elektrischen Verbindung zu der Traktionsbatterie (6) festzustellen und im Fall einer solchen Unterbrechung eine Unterbrechungsmeldung auszugeben oder bereitzustellen.

2. Flurförderzeug (2) nach Anspruch 1, **dadurch gekennzeichnet, dass** die Batteriemanagementvorrichtung (8) einen nichtflüchtigen internen Speicher (10) umfasst und ferner dazu eingerichtet ist die Unterbrechungsmeldung auf diesem Speicher (10) abzulegen.

3. Flurförderzeug (2) nach Anspruch 1 oder 2, **dadurch gekennzeichnet, dass** die Batteriemanagementvorrichtung (8) Kommunikationsmittel umfasst, mit denen eine insbesondere drahtlose Datenverbindung (12) zu einer insbesondere in oder am Flurförderzeug (2) vorhandenen dritten Einheit (14), insbesondere einer Steuereinheit des Flurförderzeugs (2), herstellbar ist, wobei die Batteriemanagementvorrichtung (8) ferner dazu eingerichtet ist, die Unterbrechungsmeldung über die Datenverbindung (12) an die dritte Einheit (14) zu senden.

4. Flurförderzeug (2) nach einem der Ansprüche 1 bis 3, **dadurch gekennzeichnet, dass** die Batteriemanagementvorrichtung (8) ferner dazu eingerichtet ist einen ersten Zeitpunkt der Unterbrechung der elektrischen Verbindung und einen zweiten Zeitpunkt einer Wiederherstellung der elektrischen Verbindung zu detektieren und als Bestandteil der Unterbrechungsmeldung auszugeben oder bereitzustellen.

5. Flurförderzeug (2) nach einem der Ansprüche 1 bis 4, **dadurch gekennzeichnet, dass** die Batteriemanagementvorrichtung (8) eine optische und/oder akustische Ausgabeeinheit (16, 18) umfasst und ferner dazu eingerichtet ist die Unterbrechungsmeldung als optisches Signal über die optische Ausgabeeinheit (16) und/oder als akustisches Signal über die akustische Ausgabeeinheit (18) auszugeben.

6. Flurförderzeug (2) nach einem der Ansprüche 1 bis 5, **dadurch gekennzeichnet, dass** die Batteriemanagementvorrichtung (8) dazu eingerichtet ist eine Unterbrechung der elektrischen Verbindung anhand eines Absinkens einer an einem Eingang der Batteriemanagementvorrichtung (8) bereitgestellten Versorgungsspannung unter einen vorgegebenen Grenzwert festzustellen.

7. Verfahren zum Überwachen einer Traktionsbatterie (6) in einem Flurförderzeug (2) mit einem elektrischen Antrieb (4) und einer Batteriemanagementvorrichtung (8), wobei die Traktionsbatterie (6) zumindest den elektrischen Antrieb (4) versorgt und elektrisch mit diesem verbunden ist, **dadurch gekennzeichnet, dass** die Batteriemanagementvorrichtung (8) eine Unterbrechung der elektrischen Verbindung zwischen der Traktionsbatterie (6) und dem Antrieb (4) feststellt und im Fall einer solchen Unterbrechung eine Unterbrechungsmeldung ausgibt oder bereitstellt.

8. Verfahren nach Anspruch 7, **dadurch gekennzeichnet, dass** die Batteriemanagementvorrichtung (8) einen nichtflüchtigen internen Speicher (10) umfasst und die Unterbrechungsmeldung auf diesem Speicher ablegt.

9. Verfahren nach Anspruch 7 oder 8, **dadurch gekennzeichnet, dass** die Batteriemanagementvorrichtung (8) Kommunikationsmittel umfasst, mit denen eine insbesondere drahtlose Datenverbindung (12) zu einer insbesondere in oder am Flurförderzeug (2) vorhandenen dritten Einheit (14), insbesondere einer Steuereinheit des Flurförderzeugs (2), hergestellt wird, wobei die Batteriemanagementvorrichtung (8) die Unterbrechungsmeldung über die Datenverbindung (12) an die dritte Einheit (14) sendet.

10. Verfahren nach einem der Ansprüche 7 bis 9, **dadurch gekennzeichnet, dass** die Batteriemanagementvorrichtung (8) ferner einen ersten Zeitpunkt der Unterbrechung der elektrischen Verbindung und einen zweiten Zeitpunkt einer Wiederherstellung der elektrischen Verbindung detektiert und als Bestandteil der Unterbrechungsmeldung ausgibt oder bereitstellt.

11. Verfahren nach einem der Ansprüche 7 bis 10, **dadurch gekennzeichnet, dass** die Batteriemanagementvorrichtung (8) eine optische und/oder akustische Ausgabeeinheit (16, 18) umfasst und die Unterbrechungsmeldung als optisches Signal über die optische Ausgabeeinheit (16) und/oder als akustisches Signal über die akustische Ausgabeeinheit (18) ausgegeben wird.

12. Verfahren nach einem der Ansprüche 7 bis 11, **dadurch gekennzeichnet, dass** die Batteriemanagementvorrichtung (8) eine Unterbrechung der elektrischen Verbindung anhand eines Absinkens einer im verbundenen Zustand von der Traktionsbatterie (6) an einem Eingang der Batteriemanagementvorrichtung (8) bereitgestellten Versorgungsspannung unter einen vorgegebenen Grenzwert feststellt.

## Claims

1. An industrial truck (2) with an electric drive (4) and a traction battery (6) for supplying at least the electric drive (4) and with a battery management device (8) electrically connected to the traction battery (6), **characterized in that** the battery management device (8) is configured to detect an interruption of the electrical connection to the traction battery (6) and, in the case of such an interruption, to output or provide an interruption notification.

2. The industrial truck (2) according to claim 1, **characterized in that** the battery management device (8) comprises a non-volatile internal memory (10) and is also configured to store the interruption notification on this memory (10).

3. The industrial truck (2) according to claim 1 or 2, **characterized in that** the battery management device (8) comprises communication means, with which an in particular wireless data connection (12) to a third unit (14) present in particular in or on the industrial truck (2), in particular a control unit of the industrial truck (2), can be established, wherein the battery management device (8) is also configured to send the interruption notification to the third unit (14) via the data connection (12).

4. The industrial truck (2) according to one of claims 1 to 3, **characterized in that** the battery management device (8) is also configured to detect a first point in time of the interruption of the electrical connection and a second point in time of a reestablishment of the electrical connection and to output or provide it as a component of the interruption notification.

5. The industrial truck (2) according to one of claims 1 to 4, **characterized in that** the battery management device (8) comprises an optical and/or acoustic output unit (16, 18) and is further configured to output the interruption notification as an optical signal via the optical output unit (16) and/or as an acoustic signal via the acoustic output unit (18).

6. The industrial truck (2) according to one of claims 1 to 5, **characterized in that** the battery management device (8) is configured to detect an interruption of the electrical connection based on a supply voltage provided at an input of the battery management device (8) falling below a specified threshold value.

7. A method for monitoring a traction battery (6) in an industrial truck (2) with an electric drive (4) and a battery management device (8), wherein the traction battery (6) supplies at least the electric drive (4) and is electrically connected to it, **characterized in that** the battery management device (8) detects an interruption of the electrical connection between the traction battery (6) and the drive (4) and, in the case of such an interruption, outputs or provides an interruption notification.

8. The method according to claim 7, **characterized in that** the battery management device (8) comprises a non-volatile internal memory (10) and stores the interruption notification on this memory.

9. The method according to claim 7 or 8, **characterized in that** the battery management device (8) comprises communication means, with which an in particular wireless data connection (12) to a third unit (14) present in particular in or on the industrial truck (2), in particular a control unit of the industrial truck (2), is established, wherein the battery management device (8) sends the interruption notification to the third unit (14) via the data connection (12).

10. The method according to one of claims 7 to 9, **characterized in that** the battery management device (8) further detects a first point in time of the interruption of the electrical connection and a second point in time of a reestablishment of the electrical connection and outputs or provides it as a component of the interruption notification.

11. The method according to one of claims 7 to 10, **characterized in that** the battery management device (8) comprises an optical and/or acoustic output unit (16, 18) and the interruption notification is output as an optical signal via the optical output unit (16) and/or as an acoustic signal via the acoustic output unit (18).

12. The method according to one of claims 7 to 11, **characterized in that** the battery management device (8) detects an interruption of the electrical connection based on a supply voltage provided at an input of the battery management device (8) when the traction battery (6) is connected falling below a specified threshold value.

## Revendications

1. Chariot de manutention (2) doté d'un entraînement électrique (4) et d'une batterie de traction (6) pour alimenter au moins l'entraînement électrique (4) et ayant un dispositif (8) de gestion de batterie relié électriquement à la batterie de traction (6), **caractérisé en ce que** le dispositif (8) de gestion de batterie est agencé de façon à détecter une interruption de la liaison électrique avec la batterie de traction (6) et de façon à émettre ou fournir un message d'interruption dans le cas d'une telle interruption.

2. Chariot de manutention (2) selon la revendication 1, **caractérisé en ce que** le dispositif (8) de gestion de batterie comprend une mémoire interne (10) non volatile et **en ce qu'**il est en outre agencé pour stocker le message d'interruption dans cette mémoire (10).

3. Chariot de manutention (2) selon la revendication 1 ou la revendication 2, **caractérisé en ce que** le dispositif (8) de gestion de batterie comprend des moyens de communication permettant d'établir une liaison de données (12), notamment sans fil, avec une troisième unité (14) présente notamment dans ou sur le chariot de manutention (2), notamment une unité de commande du chariot de manutention (2), le dispositif (8) de gestion de batterie étant en outre agencé pour envoyer le message d'interruption à la troisième unité (14) via la liaison de données (12).

4. Chariot de manutention (2) selon l'une des revendications 1 à 3, **caractérisé en ce que** le dispositif (8) de gestion de batterie est en outre agencé de façon à détecter un premier instant d'interruption de la liaison électrique et un deuxième instant de rétablissement de la liaison électrique et de façon à les émettre ou les mettre à disposition en tant que partie intégrante du message d'interruption.

5. Chariot de manutention (2) selon l'une des revendications 1 à 4, **caractérisé en ce que** le dispositif (8) de gestion de batterie comprend une unité de sortie optique et/ou acoustique (16, 18) et est en outre conçu de façon à émettre le message d'interruption sous forme de signal optique via l'unité de sortie optique (16) et/ou sous forme de signal acoustique via l'unité de sortie acoustique (13).

6. Chariot de manutention (2) selon l'une des revendications 1 à 5, **caractérisé en ce que** le dispositif (8) de gestion de batterie est agencé pour détecter une interruption de la connexion électrique en utilisant une baisse d'une tension d'alimentation fournie à une entrée du dispositif (8) de gestion de batterie en dessous d'une valeur limite prédéterminée.

7. Procédé de surveillance d'une batterie de traction (6) dans un chariot de manutention (2) ayant un entraînement électrique (4) et un dispositif (8) de gestion de batterie, la batterie de traction (6) alimentant au moins l'entraînement électrique (4) et étant reliée électriquement à celui-ci, **caractérisé en ce que** le dispositif (8) de gestion de batterie détecte une interruption de la liaison électrique entre la batterie de traction (6) et l'entraînement (4) et, dans le cas d'une telle interruption, émet ou met à disposition un message d'interruption.

8. Procédé selon la revendication 7, **caractérisé en ce que** le dispositif (8) de gestion de batterie comprend une mémoire interne (10) non volatile et stocke le message d'interruption dans cette mémoire.

9. Procédé selon la revendication 7 ou la revendication 8, **caractérisé en ce que** le dispositif (8) de gestion de batterie comprend des moyens de communication permettant d'établir une liaison de données (12), notamment sans fil, avec une troisième unité (14) présente notamment dans ou sur le chariot de manutention (2), notamment une unité de commande du chariot de manutention (2), le dispositif (8) de gestion de batterie envoyant le message d'interruption à la troisième unité (14) via la liaison de données (12).

10. Procédé selon l'une des revendications 7 à 9, **caractérisé en ce que** le dispositif (8) de gestion de batterie détecte en outre un premier instant d'interruption de la connexion électrique et un deuxième instant de rétablissement de la connexion électrique et les émet ou les met à disposition en tant que partie intégrante du message d'interruption.

11. Procédé selon l'une des revendications 7 à 10, **caractérisé en ce que** le dispositif (8) de gestion de batterie comprend une unité de sortie optique et/ou acoustique (16, 18) et **en ce que** le message d'interruption est émis sous forme de signal optique via l'unité de sortie optique (16) et/ou sous forme de signal acoustique via l'unité de sortie acoustique (18).

12. Procédé selon l'une des revendications 7 à 11, **caractérisé en ce que** le dispositif (8) de gestion de batterie détecte une interruption de la connexion électrique en utilisant une baisse d'une tension d'alimentation fournie par la batterie de traction (6) à une entrée du dispositif (8) de gestion de batterie à l'état connecté, en dessous d'une valeur limite prédéterminée.
